# EUROPÄISCHE PATENTSCHRIFT

(11) **EP 1 424 903 B1**
(45) Veröffentlichungstag und Bekanntmachung des Hinweises auf die Patenterteilung: **17.01.2007**
(21) Anmeldenummer: 02737925.4
(22) Anmeldetag: 08.04.2002
(51) Int. Cl.: A22C 13/00, A22C 11/12

(54) **CLIPFREI VERSCHLOSSENE, SCHLAUCHFÖRMIGE NAHRUNGSMITTELHÜLLE**
CLIP FREE CLOSED, TUBULAR-SHAPED FOOD COVERING
ENVELOPPE DE PRODUIT ALIMENTAIRE TUBULAIRE A FERMETURE SANS AGRAFE

(30) Priorität: 12.04.2001 DE 10118609
(43) Veröffentlichungstag der Anmeldung: 09.06.2004
(73) Patentinhaber: Kalle GmbH, 65203 Wiesbaden (DE)
(72) Erfinder: NIEDERSTÄTTER, Walter, 65343 Eltville (DE); DELIUS, Ulrich, 60529 Frankfurt (DE); GROLIG, Gerhard, D-64546 Mörfelden-Walldorf (DE); SCHIMANSKY, Klaus, 25548 Rossdorf (DE)
(74) Vertreter: Plate, Jürgen
(86) Internationale Anmeldenummer: PCT/EP2002/003856
(87) Internationale Veröffentlichungsnummer: WO 2002/082912

(56) Entgegenhaltungen:
- EP-A- 0 296 300
- EP-A- 0 589 436
- WO-A-94/07371
- DE-A- 19 641 736
- DE-A- 19 932 836
- DE-C- 687 830
- DE-U- 29 609 061

## Beschreibung

Gegenstand der vorliegenden Erfindung ist eine mit einem Nahrungsmittel gefüllte, ein- oder mehrschichtige, schlauchförmige Nahrungsmittelhülle, die an beiden Enden durch Abdrehen verschlossen ist, sowie ein Verfahren zu ihrer Herstellung.

Schlauchförmige Nahrungsmittelhüllen, insbesondere für Fleisch- und Wurstprodukte, sind prinzipiell bereits seit langer Zeit bekannt. Nach dem Füllen mit dem Nahrungsmittel wird die Hülle üblicherweise mit einem Clip, insbesondere einem Kunststoff- oder Metallclip, verschlossen. Dabei besteht stets die Gefahr, daß bei Produktionsstörungen einzelne Clips oder auch nur Teile davon in das Wurstbrät gelangen und beim Verbraucher gesundheitliche Störungen verursachen. Das birgt unkalkulierbar große Haftungsrisiken für den Hersteller der Wurst wie auch für den Hersteller der Hülle. Es hat daher bereits Bestrebungen gegeben, clipfreie Verschlußarten zu entwickeln. Sie haben sich jedoch bisher nicht durchsetzen können. So ist das Verschließen von Wursthüllen durch einfaches - in der Regel manuelles - Abdrehen der Enden bereits seit langem bekannt (s. G. Effenberger; *Wursthüllen - Kunstdarm,* 2. Aufl. [1991] Holzmann Verlag GmbH & Co. KG, Bad Wörishofen; insbesondere Kapitel 10.3"Füllen und Verschließen des Kunstdarms", S. 68 - 78). Solche Nahrungsmittelhüllen sind jedoch allgemein nicht dauerhaft und nicht sicher genug verschlossen. Beim Brühen oder Kochen der Wurst dringt Wasser durch die abgedrehten Enden ein oder die Enden drehen sich wieder auf. Dazu kann bereits der durch die Temperaturerhöhung ansteigende Innendruck ausreichen. Die abgedrehten Enden wurden daher meist zusätzlich durch Gamknotung oder Clip verschlossen, was jedoch umständlich und unwirtschaftlich ist (Effenberger, a.a.O.).

Aus der EP-A 128 668 und der EP-A 211 655 sind darüber hinaus Verfahren und Vorrichtungen zum Verschließen eines Endes einer aus einer schlauchförmigen Hülle hergestellten Raffraupe bekannt, wobei der Verschluß durch Zusammendrehen und Erhitzen des einen Endes der Hülle erzeugt wird. Konkret beschrieben sind dort allein Raffraupen aus einer Kollagenhülle. Die auf diese Weise einseitig verschlossenen Raffraupen werden dann an die Wursthersteller geliefert, wo sie auf konventionelle Weise weiterverarbeitet werden.

Es stellte sich damit nach wie vor die Aufgabe, eine mit einem Nahrungsmittel gefüllte, schlauchförmige Hülle zur Verfügung zu stellen, die ohne Clip, Garnknotung oder ähnliche mechanisch wirkende Hilfsmittel dauerhaft und sicher verschlossen werden kann. Der Verschluß soll zudem einfach, schnell und kostengünstig erfolgen. Er muß so sicher sein, daß er bei der weiteren Verarbeitung, insbesondere beim Brühen oder Kochen der Wurst, in jedem Fall intakt bleibt.

Gelöst wird die Aufgabe, wenn die Enden der schlauchförmigen Hülle nach dem Füllen abgedreht und dann verschweißt, heißgesiegelt oder verklebt werden.

Gegenstand der Erfindung ist demgemäß eine mit einem Nahrungsmittel gefüllte, ein- oder mehrschichtige, schlauchförmige Hülle, die an beiden Enden durch Abdrehen verschlossen ist, dadurch gekennzeichnet, daß der durch Abdrehen entstandene Verschluß durch Heißsiegeln oder Kleben dauerhaft fixiert ist. Die Fixierung erfolgt bevorzugt durch eine thermische Behandlung, d.h. durch Verschweißen oder Heißsiegeln.

Die schlauchförmige Hülle besteht vorzugsweise aus einem heißsiegelfähigen Polymerinaterial. Eine für die Zwecke der vorliegenden Erfindung brauchbare heißsiegelfähige Nahrungsmittelhülle ist allgemein mehrschichtig, wobei mindestens die innere, mit dem Nahrungsmittel in Kontakt stehende Schicht heißsiegelfähig ist. Sie kann durch Coextrudieren oder Laminieren hergestellt werden, wobei Coextrudieren allgemein bevorzugt ist. Als besonders zweckmäßig hat sich die Coextrusion mit Hilfe einer Mehrschicht-Ringdüse erwiesen. Anschließend wird die Hülle in der Regel biaxial verstreckt, häufig auch thermofixiert. Das biaxiale Verstrecken kann in einem Folienblasverfahren oder einem sogenannten "Doubte-bubble"-Verfahren erfolgen. Die verstreckte schlauchförmige Nahrungsmittelhülle hat beim Erhitzen auf bis zu 90 °C allgemein einen Schrumpf in Längs- und Querrichtung von nicht mehr als 20 %, bevorzugt nicht mehr als 15 %.

Durch geeignete Wahl der Verstreckungsbedingungen läßt sich zudem erreichen, daß sich die Folie an den Abdrehstellen nicht von selbst wieder aufdreht, d.h. daß sie gute Twisteigenschaften aufweist. Das ist insbesondere dann wichtig, wenn die Hülle an den durch Abdrehen verschlossenen Stellen durchtrennt wird, bevor diese Stellen durch Heißsiegeln oder Kleben fixiert werden. So steigt die Drehfähigkeit mit zunehmendem Verhältnis von Längs- zu Querstreckung. Die Längsverstreckung beträgt in der Regel 2,8 : 1 bis 4,5 : 1, bevorzugt 3,0 : 1 bis 3,9 : 1. Die Querverstreckung beträgt bevorzugt 2,4 : 1 bis 3,8 : 1. Allgemein beträgt das Streckverhältnis quer : längs etwa 0,6 bis 1,4, bevorzugt 0,7 bis 1,1. Daneben sind eine möglichst hohe bleibende Dehnung in Querrichtung sowie eine möglichst geringe Reißdehnung in Längsrichtung vorteilhaftfüreine sich selbst erhaltende Verdrehung derschlauchförmigen Hülle. Die bleibende Dehnung sollte in Querrichtung mehr als 1%, bevorzugt 2 bis 3 %, bezogen auf die Ausgangslänge der Folie, betragen. Zur Bestimmung der bleibenden Dehnung wird ein 15 mm breiter, quer zur Maschinenrichtung ausgeschnittener Folienstreifen in eine Zugprüfmaschine eingespannt (Einspannlänge 200 mm). Die Probe wird dann mit einer Geschwindigkeit von 20 mm/min (10 % pro Minute) gedehnt. Danach, d.h. bei einer Probenlänge von nunmehr 220 mm (d.h. bei einer aufgezwungene Dehnung von 10 %), wird die Probe mit gleicher Geschwindigkeit entspannt. Die bleibende Dehnung kann dann aus dem dabei gemessenen Kraft-Dehnungs-Diagramm bestimmtwerden.

Die auf der Innenseite befindliche heißsiegelfähige Schicht besteht zweckmäßig aus einem thermoplastischen Material, das einen niedrigeren Schmelzpunkt hat als die eigentliche Trägerschicht. Für praktische Zwecke bevorzugt ist eine siegelfähige Schicht aus einem thermoplastischen Material mit einem Schmelzpunkt von bis zu 150 °C. Als wesentlichen Bestandteil oder als Hauptbestandteil enthält die heißsiegelfähige Schicht demgemäß beispielsweise ein Polyolefin, insbesondere ein Polyethylen (speziell ein LDPE oder LLDPE) oder ein Ethylen-Copolymer (speziell Ethylen/Propylen-Copolymere, Ethylen/Vinylacetat-Copolymere oder Ethylen/ (Meth)acrylsäure-Copolymere bzw. Salze davon, wobei die letztgenannten auch als lonomere bezeichnet werden und beispielsweise unter dem Namen ^{®}Surlyn von DuPont erhältlich sind). lonomere haben darüber hinaus sehr gute haftungsvermittelnde Eigenschaften gegenüber verschiedenen anderen Kunststoffen und wirken so einem unerwünschten Delaminieren der mehrschichtigen Nahrungsmittelhülle entgegen. Die Heißsiegelfähigkeit kann darüber hinaus mit Hilfe von Fettsäuremetallsalzen, wie Calciumstearat, verbessert werden.

Die siegelfähige Innenschicht muß darüber hinaus eine ausreichende Bräthaftung sicherstellen. Die Haftung darf nicht zu stark sein (damit sich die Nahrungsmittelhülle später noch einwandfrei abziehen läßt), aber auch nicht zu schwach (andernfalls bildet sich leicht ein sogenannter Geleeabsatz zwischen Brät und Hülle, was von den Verbrauchern häufig als Qualitätsmangel empfunden wird).

Anstelle einer heißsiegelfähigen Schicht auf der Innenseite kann auch eine heißsiegelfähige Beschichtung genügen. Diese kann durch Aufbringen einer entsprechenden Beschichtungsflüssigkeit und nachfolgendes Trocknen hergestellt werden. Die auf diese Weise hergestellten siegelfähigen Beschichtungen sind jedoch nur relativ dünn (etwa 10 bis 300 nm), so daß die damit erreichbare Siegelnahifestigkeit beschränkt ist. Die Innenseite von schlauchförmigen Folien läßt sich zudem nur mit großem technischen Aufwand beschichten, so daß diese Alternative praktisch nur für Flachfolien Bedeutung hat, die dann in einem weiteren Schritt zu Schlauchfolien gesiegelt werden.

Generell gilt, daß die Heißsiegelschichten nach dem Siegeln eine ausreichende Temperaturbeständigkeit haben müssen, damit die Hülle das Brühen oder Kochen der Wurst möglichst unverändert übersteht.

Die Trägerschicht(en) in der mehrschichtigen schlauchförmigen Nahrungsmittelhülle bestehen bevorzugt aus aliphatischem und/oder teilaromatischem Polyamid und/oder Copolyamid (wie PA 6, PA 66, PA 6I/6T, PA 6/66, PA 46, PA 610 oder PA 612). Solche Polyamidschichten besitzen bereits eine gewisse Sperrwirkung für Sauerstoff und Aromabestandteile. Sie nehmen bis zu etwa 6 Gew.-% Wasser auf. Das gilt besonders für Schichten aus aliphatischem Polyamid oder Copolyamid. Gegebenenfalls können die Polyamide bzw. Copolyamide der Trägerschicht(en) mit anderen Polymeren, insbesondere mit Polyolefinen abgemischt sein. Deren Anteil beträgt dann allgemein weniger als 50 Gew.-%, bezogen auf das Gewicht der Trägerschicht. Es sind vor allem die mechanischen Eigenschaften der Nahrungsmittelhülle, die durch die Trägerschicht(en) bestimmt werden. Die Trägerschichten haben allgemein eine Dicke von 10 bis 100 µm, bevorzugt von 20 bis 60 µm.

Die Nahrungsmittelhülle enthält darüber hinaus in einer bevorzugten Ausführungsform mindestens eine Wasserdampf- und/oder Sauerstoffbarriereschicht. Dadurch wird beim Lagern ein Gewichtsverlust, d.h. ein Austrocknen des Nahrungsmittels verhindert oder stark herabgesetzt. Eine gute Sauerstoffbarriere ist besonders bei sehr luftempfindlichen Nahrungsmitteln, wie Leberwurst, wichtig. Barriereschichten bestehen beispielsweise aus Polyvinylidenchlorid (PVDC) oder Vinylidenchlorid-Copolymeren, Polyvinylchlorid (PVC), Ethylen/Vinylalkohol(EVOH)-Copolymeren oder Polyethylenterephthalat (PET). Aus Umweltschutzgründen sind Barriereschichten aus chlorfreien Materialien günstiger. Die Barriereschichten haben allgemein eine Dicke von (jeweils) 4 bis 25 µm, bevorzugt von 5 bis 15 µm.

Häufig befinden sich zwischen den einzelnen Schichten noch relativ dünne (d.h. weniger als etwa 4 µm dicke) Haftschichten. Haftschichten sind dann notwendig oder zweckmäßig, wenn Schichten aus unterschiedlichen Polymeren aufeinanderstoßen. Polyolefin- und Polyamidschichten zeigen beispielsweise nur eine relativ geringe Haftung aneinander, so daß hier Haftschichten angezeigt sind. Haftungsvermittelnde Komponenten können aber auch direkt einer oder beiden der aneinanderstoßenden Schichten zugemischt sein. Geeignete Komponenten dieser Art sind u.a. Polyolefine, die funktionelle Gruppen (insbesondere Carboxylgruppen) aufweisen.

Die schlauchförmige Nahrungsmittelhülle kann ein Kranzdarm, ein klein-, mittel- oder großkalibriger Kunstdarm sein. Das Kaliber der Hülle beträgt allgemein 30 bis 60 mm für Kranzdarm, 20 bis 50 mm für kleinkalibrigen Kunstdarm, 50 bis weniger als 80 mm für mittelkalibrigen Kunstdarm und mehr als 80 mm (bis etwa 200 mm) für großkalibrigen Kunstdarm.

In jeden Fall verfügt die schlauchförmige Nahrungsmittelhülle über eine ausreichende mechanische Festigkeit, so daß sie beim Abdrehen nicht reißt oder delaminiert.

Vorrichtungen zum Abteilen einer schlauchförmigen Nahrungsmittelhülle durch Abdrehen sind bereits beschrieben (s. EP-A 476 258). Geeignete Vorrichtungen zum Heißsiegeln sind dem Fachmann ebenfalls bekannt. Sie umfassen allgemein beheizte Siegelbacken, die direkt mit den zu siegelnden Flächen in Kontakt gebracht werden. Besonders günstig ist es, wenn die Abdrehvorrichtung sich in kurzem Abstand hinter dem Ende des Füllrohrs und unmittelbar vor der Heißsiegelvorrichtung befindet oder sogar mit dieser zu einer einzigen Vorrichtung kombiniert ist. Wichtig ist, daß der Kunstdarrnabschnitt vor dem Abdrehen und Siegeln oder Verschweißen brätfrei gehalten wird. Eventuell noch vorhandende Brätreste können gegebenenfalls mit einer sogenannten "Verdrängerschere" aus dem abzudrehenden Bereich entfernt werden. Die Abdreh- und Siegelvorrichtung kann somit die Clipeinrichtung in einer der bekannten, weitgehend automatisch arbeitenden Wurstfüll-, Portionier- und Clipanlagen ersetzen.

Im Gegensatz zum Heißsiegeln kann das Schweißen auch berührungslos erfolgen, beispielsweise durch Einwirkung von Laserstrahlen (insbesondere IR-Laserstrahlen mit einer Wellenlänge von 600 bis 1200 nm) oder Hochfrequenzstrahlung. Die Temperatur läßt sich dabei jedoch weniger genau steuern. Schweißverfahren sind auch für einschichtige Nahrungsmittelhüllen geeignet. Sie sind jedoch allgemein weniger bevorzugt.

Das Heißsiegeln, erfolgt innerhalb einer so kurzen Zeitspanne (Bruchteile einer Sekunde bis zu wenigen Sekunden), daß das in der Hülle befindliche Nahrungsmittel nur wenig oder praktisch gar nicht erwärmt wird.

Die Fixierung der zusammengedrehten Wurstzipfel kann auch mit Hilfe von Klebern, insbesondere Heißschmelzklebern oder Kontaktklebern, erfolgen. Bevorzugt sind Kontaktkleber, die ringförmig auf die Außenseite der Hülle mindestens an den Stellen aufgetragen werden, an denen die Hülle dann abgedreht wird. Durch das Abdrehen wird gleichzeitig der für eine dauerhafte Kontaktklebung notwendige Druck erzeugt. Auch hier gilt wieder, daß die Verklebung der Abdrehstellen ausreichend temperaturstabil sein muß und ein Erhitzen auf die beim Kochen oder Brühen der Wurst üblichen Temperaturen von etwa 80 °C ohne wesentliche Veränderung überstehen muß.

Gegenstand der vorliegenden Erfindung ist demgemäß auch ein Verfahren zur Herstellung von Nahrungsmittelprodukten in einer schlauchförmigen Hülle. Es ist dadurch gekennzeichnet, daß die Hülle nach dem Einfüllen der jeweils vorgesehenen Menge an Nahrungsmittel durch Abdrehen verschlossen und zumindest ein Teil der durch Abdrehen verschlossenen Länge der Hülle durch Heißsiegeln, oder Kleben fixiert wird. Der fixierte Bereich ist vorzugsweise so lang, daß die Hülle später dort problemlos durchtrennt werden kann und dabei das Ende des einen Hüllenabschnitts und der Anfang des folgenden sicher verschlossen bleiben. Das Verfahren ist insbesondere im industriellen Bereich anwendbar, wo zuvor geraffte, schlauchförmige Hüllen mit einer Gesamtlänge - je nach Kaliber - von etwa 30 bis 80 m und mehr portionsweise gefüllt, nach dem Einfüllen der jeweils vorgesehenen Menge an Nahrungsmittel durch Abdrehen verschlossen und die verschlossenen Stellen anschließend auf die beschriebene Weise fixiert werden. Das erfindungsgemäße Verfahren ist damit besonders zur Herstellung von Koch- und Brühwurst geeignet.

## Patentansprüche

1. Mit einem Nahrungsmittel gefüllte, ein- oder mehrschichtige, schlauchförmige Hülle aus thermoplastischem Material, die an beiden Enden durch Abdrehen verschlossen ist, **dadurch gekennzeichnet, daß** der durch Abdrehen entstandene Verschluß durch Heißsiegeln oder Kleben dauerhaft fixiert ist.

2. Nahrungsmittelhülle gemäß Anspruch 1, **dadurch gekennzeichnet, daß** sie mehrschichtig ist und auf der Innenseite eine heißsiegelfähige Schicht aufweist.

3. Nahrungsmittelhülle gemäß Anspruch 2, **dadurch gekennzeichnet, daß** heißsiegelfähige Schicht aus einem thermoplastischen Material mit einem Schmelzpunkt von bis zu 150 °C besteht.

4. Nahrungsmittelhülle gemäß Anspruch 2 oder 3, **dadurch gekennzeichnet, daß** die heißsiegelfähige Schicht ein Polyolefin, bevorzugt ein Polyethylen oder ein Ethylen-Copolymer umfaßt.

5. Nahrungsmittelhülle gemäß Anspruch 2, **dadurch gekennzeichnet, daß** die heißsiegelfähige Schicht ein Fettsäuremetallsalz, bevorzugt Calciumstearat, enthält.

6. Nahrungsmittelhülle gemäß Anspruch 2, **dadurch gekennzeichnet, daß** sie mindestens eine Trägerschicht aus aliphatischem und/oder teilaromatischem Polyamid oder Copolyamid umfaßt.

7. Nahrungsmittelhülle gemäß Anspruch 2, **dadurch gekennzeichnet, daß** sie zusätzlich mindestens eine Wasserdampf- und/oder Sauerstoffbarriereschicht umfaßt.

8. Nahrungsmittelhülle gemäß einem oder mehreren der Ansprüche 1 bis 7, **dadurch gekennzeichnet, daß** sie biaxial verstreckt ist und das Verhältnis von Quer- zu Längsstreckung im Bereich von 0,6 bis 1,4 liegt.

9. Verfahren zur Herstellung von Nahrungsmittelprodukten in einer schlauchförmigen Hülle aus thermoplastischem Material , **dadurch gekennzeichnet, daß** die Hülle nach dem Einfüllen der jeweils vorgesehenen Menge an Nahrungsmittel durch Abdrehen verschlossen und zumindest ein Teil der durch Abdrehen verschlossenen Länge der Hülle durch Heißsiegeln; oder Kleben fixiert wird.

10. Verfahren gemäß Anspruch 9, **dadurch gekennzeichnet, daß** sich die Vorrichtung zum Abdrehen der Nahrungsmittelhülle in kurzem Abstand hinter dem Ende des Füllrohrs und unmittelbar vor der Vorrichtung zum Heißsiegeln befindet, wobei die Vorrichtungen bevorzugt zu einer einzigen kombiniert sind.

## Claims

1. A single- or multilayer tubular casing which is stuffed with a food and made of thermoplastic material which is closed at both ends by twisting off, the closure resulting by twisting off being permanently fixed by hot sealing or gluing.

2. The food casing as claimed in claim 1, wherein it is multilayered and on the inside has a hot-sealable layer.

3. The food casing as claimed in claim 2, wherein the hot-sealable layer comprises a thermoplastic material having a melting point of up to 150 °C.

4. The food casing as claimed in claim 2 or 3, wherein the hot-sealable layer comprises a polyolefin, preferably a polyethylene or an ethylene copolymer.

5. The food casing as claimed in claim 2, wherein the hot-sealable layer contains a fatty acid metal salt, preferably calcium stearate.

6. The food casing as claimed in claim 2, wherein it comprises at least one carrier layer of aliphatic and/or partially aromatic polyamide or copolyamide.

7. The food casing as claimed in claim 2, wherein it additionally comprises at least one water vapor-and/or oxygen-barrier layer.

8. The food casing as claimed in one or more of claims 1 to 7, wherein it is biaxially stretched and the ratio of transverse to longitudinal stretching is in the range from 0.6 to 1.4.

9. A method for producing food products in a tubular casing made of thermoplastic material, which comprises the casing, after being stuffed with the respectively provided amount of food, being sealed by twisting off and at least a part of the length of the casing sealed by twisting off being fixed by hot sealing or gluing.

10. The method as claimed in claim 9, wherein the apparatus for twisting off the food casing is situated a short distance downstream of the end of the stuffing horn and immediately upstream of the apparatus for hot sealing, the apparatuses preferably being combined to form a single apparatus.

## Revendications

1. Enveloppe tubulaire à une ou plusieurs couches en matériau thermoplastique remplie d'un produit alimentaire et qui est fermée aux deux extrémités par torsion, **caractérisée en ce que** la fermeture effectuée par torsion est fixée en permanence par thermoscellage ou collage.

2. Enveloppe de produit alimentaire selon la revendication 1, **caractérisée en ce qu'**elle possède plusieurs couches et **en ce qu'**elle présente sur la face interne une couche thermoscellable.

3. Enveloppe de produit alimentaire selon la revendication 2, **caractérisée en ce que** la couche thermoscellable est constituée d'un matériau thermoplastique avec un point de fusion allant jusqu'à 150°C.

4. Enveloppe de produit alimentaire selon la revendication 2 ou 3, **caractérisée en ce que** la couche thermoscellable comprend une polyoléfine, de préférence un polyéthylène ou un copolymère d'éthylène.

5. Enveloppe de produit alimentaire selon la revendication 2, **caractérisée en ce que** la couche thermoscellable contient un sel métallique d'acide gras, de préférence du stéarate de calcium.

6. Enveloppe de produit alimentaire selon la revendication 2, **caractérisée en ce qu'**elle comprend au moins une couche de support formée d'un polyamide ou d'un copolyamide aliphatique et/ou partiellement aromatique.

7. Enveloppe de produit alimentaire selon la revendication 2, **caractérisée en ce qu'**elle comprend en outre au moins une couche barrière à la vapeur d'eau et/ou à l'oxygène.

8. Enveloppe de produit alimentaire selon une ou plusieurs des revendications 1 à 7, **caractérisée en ce qu'**elle est étirée biaxialement et **en ce que** le rapport de l'étirage transversal à l'étirage longitudinal se situe dans la plage de 0,6 à 1,4.

9. Procédé de fabrication de produits alimentaires dans une enveloppe tubulaire en matériau thermoplastique, **caractérisé en ce que** l'enveloppe est fermée par torsion après remplissage de la quantité respectivement prévue de produit alimentaire et **en ce qu'**au moins une partie de la longueur de l'enveloppe fermée par torsion est fixée par thermoscellage ou collage.

10. Procédé selon la revendication 9, **caractérisé en ce que** le dispositif de torsion de l'enveloppe de produit alimentaire se trouve à courte distance derrière l'extrémité du tube de remplissage et directement devant le dispositif de thermoscellage, les dispositifs étant de préférence combinés en un seul.
